# EUROPEAN PATENT SPECIFICATION

(11) **EP 2 710 101 B1**
(45) Date of publication and mention of the grant of the patent: **08.08.2018**
(21) Application number: 12766336.7
(22) Date of filing: 16.05.2012
(51) Int. Cl.: C10L 9/08

(54) **METHOD FOR COOLING AND INCREASING ENERGY YIELD OF A TORREFIED PRODUCT**
VERFAHREN ZUR KÜHLUNG EINES TORREFIZIERTEN PRODUKTS UND ZUR ERHÖHUNG DES STROMERTRAGS DARAUS
PROCÉDÉ DE REFROIDISSEMENT ET D'AUGMENTATION DU RENDEMENT ÉNERGÉTIQUE D'UN PRODUIT TORRÉFIÉ

(30) Priority: 18.05.2011 SE 1150463
(43) Date of publication of application: 26.03.2014
(73) Proprietor: Bioendev AB, 901 05 Umeå (SE)
(72) Inventor: OLOFSSON, Ingemar, S-905 80 Umeå (SE); NORDWAEGER, Martin, S-906 42 Umeå (SE); HÅKANSSON, Katarina, S-914 32 Nordmaling (SE); NORDIN, Anders, S-907 52 Umeå (SE); POMMER, Linda, S-907 52 Umeå (SE)
(74) Representative: Kransell & Wennborg KB
(86) International application number: PCT/SE2012/050527
(87) International publication number: WO 2012/158112

(56) References cited:
- EP-A2- 2 385 096
- WO-A1-2010/129988
- WO-A1-2011/119470
- WO-A2-2011/112526
- US-A1- 2008 263 891
- US-B1- 6 374 513

## Description

### Technical field

The present invention relates to the field of torrefaction of biomass. In particular, it relates to a method and a system for efficient cooling of torrefied material which also increases energy yield and hydrophobicity of the torrefied product and decreases clogging of the cooling device.

### Background

To be able to compete with and replace fossil fuel energy carriers such as coal, oil and natural gas, lignocellulosic biomass would benefit from some form of pre-treatment method to overcome inherent drawbacks. The pre-treatment method torrefaction has been shown to improve biomass fuel qualities such as energy density, water content and milling, feeding and hydrophobic properties [1-4]. These improvements establish torrefaction as a key process in facilitating an expanding market for biomass raw materials. Torrefaction is a thermal pre-treatment method that normally takes place in a substantially inert (oxygen free) atmosphere at a temperature of about 220-600°C. During the process course a combustible gas comprising different organic compounds is produced from the biomass feedstock in addition to the torrefied biomass.

The process of producing a torrefied material from lignocellulosic biomass can be said to include four stages:
1) a drying step, wherein free water retained in the biomass is removed;
2) a heating step in which physically bound water is released and the temperature of the material is elevated to the desired torrefaction temperature;
3) a torrefaction stage, in which the material is actually torrefied and which starts when the material temperature reaches about 220°C -230°C. During this stage, the biomass partly decomposes and releases different types of volatiles, such as hydroxy acetone, methanol, propanal, short carboxylic acids etc. In particular, the torrefaction stage is characterized by decomposition of hemicellulose at temperatures from 220°C -230°C, and at higher torrefaction temperatures cellulose and lignin also starts to decompose and release volatiles; cellulose decomposes at a temperature of 305-375°C and lignin gradually decomposes over a temperature range of 250-500°C;
4) a cooling step to terminate the process and facilitate handling. The torrefaction process is terminated as soon as the material is cooled below 220°C -230°C.

US 6,374,513 discloses a process for the heat treatment of lignocellulosic material where the material is preheated and dried at a temperature close to the vaporization temperature of water, heated in a reducing atmosphere and cooled by the injection of water vapor. This is performed by spraying water, using the burner, into the combustion chamber. The effect of this is to decrease the temperature in the treatment chamber without this creating any thermal shock.

### Summary of the present disclosure

During the cooling process of torrefied material, the material continues to release gases until the temperature of the material is decreased below about 200°C. However, the material need to be further cooled to below 130°C to ensure safe self ignition temperatures. Therefore, in the prior art, torrefied material have been directly cooled in a cooling device such as a screw cooler to decrease the temperature to below 130°C, see e.g. WO2009/151367 A1. One problem with this approach is that the gases released from the torrefied material during the cooling process will condense on cold surfaces within the cooling device leading to fouling or clogging of said device. Another drawback with this solution is that the cooling device has to be quite large, and hence expensive, since the temperature of the torrefied material has to be decreased all the way from the torrefaction temperature, down to the safe handling temperature, i.e. below 130 °C. Another problem with the cooling processes of torrefied material described in the prior art is that the gases released during the cooling process leads to a decrease in energy yield of the torrefied product.

There is thus a demand for an improved method for cooling torrefied material. The present inventors have solved the problems described above by a method for cooling torrefied material, including, applying water to the torrefied material to quench-cool the material and thereafter further cooling the torrefied material and at least part of the torrefaction gases, given off by the material, in a common cooling device such that components of the torrefaction gases condense on the torrefied material within the common cooling device. The method has several advantages compared to the methods described in the prior art:
1) Since the material initially is quench-cooled with water, less cooling has to take place in the cooling device and thereby the cooling device could be kept smaller and hence cheaper.
2) By introduction of steam and torrefaction gases, in particular the humid gases formed during and after the quench-cooling with water, into the cooling device, the cooling effect within the cooling device is increased. This also facilitates the use of a smaller cooling device.
3) Since the material is already cooled when it enters the cooling device, gases given off by the material within the cooling device and torrefaction gases introduced into the cooling device will condense on the cold torrefied material which will decrease condensation on cold surfaces within the cooling device which in turns decrease clogging of said cooling device.
4) Condensation of gases on the torrefied material increases the energy yield of the final torrefied product,
5) Condensation of gases on the torrefied material increases the hydrophobicity of the final torrefied product, which often is a highly desired characteristic of the torrefied products.

Accordingly, the present invention relates to a torrefaction method, comprising the steps of:
a) subjecting an optionally pretreated biomass to torrefaction to produce a torrefied material having a temperature of above 220 °C and torrefaction gases;
b) applying water to the torrefied material to reduce the temperature of the torrefied material, provided that the temperature is not reduced below 120 °C, preferably not below 150 °C most preferably not below 190 °C
c) further cooling the torrefied material and at least part of the torrefaction gases generated from the material during step b) and/or prior to step b) and/or after step b) in a common cooling device such that components of the torrefaction gases condenses in the common cooling device.

In another aspect the invention relates to a system for cooling a torrefied material, comprising:
a torrefaction reactor for converting an optionally pretreated biomass to a torrefied material having a temperature of above 250 °C and torrefaction gases, said torrefaction reactor comprising an outlet;
a water application device for applying water to the torrefied material from the torrefaction reactor, said water application device being arranged at or in connection to the outlet of the torrefaction reactor;
a cooling device for further cooling the torrefied material and at least part of the torrefaction gases generated in the torrefaction reactor or the water application device, said cooling device being provided with means for guiding the torrefied material and the at least part of the torrefaction gases to an inlet of the cooling device.

### Brief description of the figures

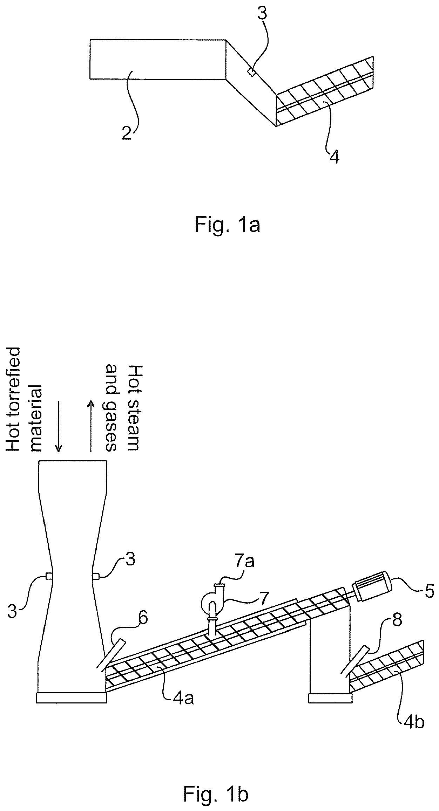

Figure 1 a. shows a torrefaction reactor, connected to an arrangement for cooling torrefied material comprising a water application device and a cooling device for further cooling.
Figure 1 b. shows an arrangement for cooling a torrefied material, comprising a water application device and a cooling device for further cooling.
Figure 2a and 2b show two different torrefaction arrangements.
Figure 3 and 4 show time and temperature of a biomass in a torrefaction reactor connected to an arrangement for cooling torrefied material. The arrow indicates the water quenching.

### Definitions:

Torrefaction: A thermal pre-treatment method that takes place in a virtually inert (oxygen-reduced or oxygen free) atmosphere at a temperature above 220 °C but below 600 °C and which produces a torrefied biomass and combustible gases. During a torrefaction stage, parts of the biomass, in particular hemicellulose, decompose and release different types of organic volatiles. In a torrefaction process starting from raw biomass, the actual torrefaction stage is preceded by a drying stage wherein free water retained in the biomass is removed and by a heating stage wherein the biomass is heated to the desired torrefaction temperature.

Drying zone: A specific region of a compartment in a torrefaction arrangement, located upstream of a heating zone in relation to a biomass inlet of a torrefaction arrangement, comprising means for regulating the temperature in said specific region and wherein a biomass is dried to a water content below 10 % prior to heating.

Heating zone: A specific region of a compartment in a torrefaction arrangement, located upstream of a torrefaction zone in relation to a biomass inlet of a torrefaction arrangement, comprising means for specifically regulating the temperature in said specific region and wherein the temperature of a biomass is increased to a temperature near the desired torrefaction temperature prior to torrefaction.

Torrefaction zone: A specific region of a compartment in a torrefaction arrangement, located downstream of a heating zone in relation to a biomass inlet of a torrefaction arrangement, comprising means for specifically regulating the temperature in said specific region and wherein the temperature of a previously heated biomass is kept virtually constant at the desired torrefaction temperature for a desired torrefaction time wherein a desired torrefaction temperature is in a range between 220 °C to 600 °C.

Connecting zone: A specific region in a torrefaction arrangement located immediately upstream of a heating zone and immediately downstream of a torrefaction zone in relation to a biomass inlet of said torrefaction arrangement.

Torrefaction time: The time the temperature of the material is kept virtually constant at the torrefaction temperature. The residence time of the material in the torrefaction zone may be referred to as the torrefaction time.

### Detailed description

In a first aspect the invention relates to a torrefaction method, comprising the steps of:
a) subjecting an optionally pretreated biomass to torrefaction to produce a torrefied material having a temperature of above 220 °C and torrefaction gases;
b) applying water to the torrefied material to reduce the temperature of the torrefied material, provided that the temperature is not reduced below 120 °C, preferably not below 150 °C most preferably not below 190 °C
c) further cooling the torrefied material and at least part of the torrefaction gases generated during step a) and/or b) in a common cooling device such that components of the torrefaction gases condense in the common cooling device.

In one embodiment the torrefaction gases are diverted from the common cooling device during step c), before the cooling of the torrefied material is completed. In another embodiment the torrefaction gases are diverted during step c), when they have a temperature above the water dew point, such as above 80 °C, such as 100-200 °C, such as 150-200 °C. In this manner, organic components are allowed to condensate while the condensation of water may be avoided. The diverted gases may be combusted for heat recovery.

According to another embodiment the torrefied material produced in step a) has a temperature of above 220 °C, such as 220-600 °C , such as 240-500 °C, such as 240-400 °C, such as 240-350 °C such as 270-350 °C, before step b). In another embodiment, the temperature of the torrefied material is reduced to below 250 °C, preferable below 220 °C, in step b). In another embodiment the temperature of the torrefied material is reduced to 150-220 °C in step b). In another embodiment the temperature of the torrefied material is reduced to below 130 °C preferably below 100 °C in step c).

In one embodiment the biomass is lignocellulosic biomass, such as wood material. A particularly preferred form of biomass for the present invention is wood chips.

Another aspect of the invention relates to a system for cooling a torrefied material, comprising:
a torrefaction reactor for converting an optionally pretreated biomass to a torrefied material having a temperature of above 250 °C and torrefaction gases, said torrefaction reactor comprising an outlet;
a water application device for applying water to the torrefied material from the torrefaction reactor, said water application device being arranged at or in connection to the outlet of the torrefaction reactor;
a cooling device for further cooling the torrefied material and at least part of the torrefaction gases generated in the torrefaction reactor and/or water application device, said cooling device being provided with means for guiding the torrefied material and the at least part of the torrefaction gases to an inlet of the cooling device.

According to one embodiment the means for guiding the at least part of the torrefaction gases is a fan arranged in connection to an outlet of the cooling device. Such a fan creates an underpressure in the cooling device, which sucks torrefaction gases into the cooling device. In one embodiment the cooling device comprises a first outlet for gases and a second outlet for torrefied material, wherein the first outlet is located upstream of the second outlet. If a fan is used in such an embodiment, it is preferably connected to the first outlet. In one embodiment the cooling device is an indirect heat exchanger such as a screw cooler. Even though a large proportion of the gases within the cooling device will condense on the cold torrefied material a part of the gases might still condense on cold surfaces within the cooling device which might lead to clogging of said cooling device. Therefore, in a preferred embodiment, the screw cooler is designed such that the condensed gas components on the screw cooler wear off as the screw cooler operates/rotates.

In some cases it is desired to direct the gases from the cooling device out from the cooling device earlier so that gases having a relatively high content of condensable components can be used for combustion. In other cases it is important to get a product with high hydrophobicity and hence the gases should be diverted from the cooling device later. Therefore, according to one embodiment the first outlet for gases is moveable over the cooling device so that the position of the gas outlet (first outlet) can be adjusted.

According to an alternative aspect of the present disclosure, the torrefaction gases are diverted out of the system for cooling a torrefied material downstream the water application device for applying water to the torrefied material, but upstream the cooling device for further cooling the torrefied material in order to minimize clogging of the cooling device.

In one embodiment the temperature of the diverted gas can be adjusted by regulating the quench cooling with water in the water application device. By adjusting the temperature it is possible to e.g. divert organic acids in the gas while e.g. tar components condense on the material.

According to one embodiment the biomass is lignocellulosic biomass such as wood material, e.g. wood chips.

### Detailed description of exemplary embodiments

Figure 1a shows a system for cooling a torrefied material, comprising a torrefaction reactor (2) for converting biomass to a torrefied material having a temperature of above 220 °C and torrefaction gases. In connection to an outlet of the torrefaction reactor (2), a water application device (3) for applying water to the torrefied material from the torrefaction reactor is arranged. The torrefied material that has passed the water application device (3) is fed to a cooling device (4) for further cooling the torrefied material together with torrefaction gases such that components of the torrefaction gases condenses in the cooling device (4), e.g. on the torrefied material.

Figure 1b shows an arrangement for cooling torrefied material. Hot material is initially quench-cooled by a water application device (3). Torrefaction gases and steam given off from the material before, during and after the quench cooling is guided, together with the quench-cooled torrefied material, into a first cooling device (4a) for further cooling of the torrefied material. Within the first cooling device (4a), condensables in the torrefaction gases condense on the cold torrefied material which increases the hydrophobicity and energy yield of the torrefied material. The humid gases will also increase the heat transfer within the first cooling device (4a) which increases the cooling effect. The transport of the torrefied material in the first cooling device (4a) is mediated by the rotation of a screw cooler which is driven by an engine (5). At least part of the torrefaction gases within the first cooling device (4a) are diverted from the first cooling device through a cooling device outlet connected to a fan (7), An outlet (7a) of the fan (7) may be connected to a boiler (not shown), in which the diverted torrefaction gases are combusted. From the first a first cooling device (4a) the torrefied material is guided to a second cooling device for (4b) further cooling the torrefied material. The temperature of the cooled torrefied material is measured using a first Infrared thermometer (6) and a second Infrared thermometer (8).

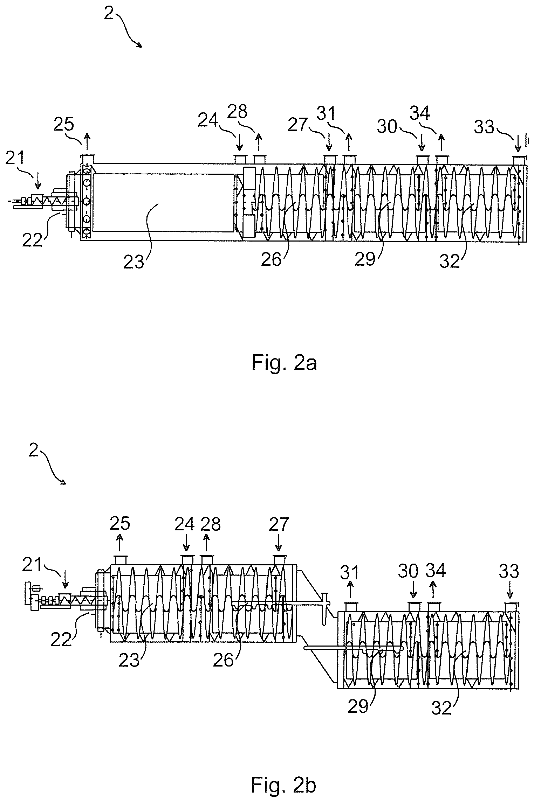

Figure 2a shows a torrefaction arrangement having a biomass inlet (21) wherein the biomass is introduced in the torrefaction arrangement by means of a feeding screw (22). The biomass is dried in a drying zone (23)) wherein heat is supplied to the drying zone (23) by means of a heating media (e.g. hot gases) through a drying zone heating media inlet (24) and wherein the heating media leaves the drying zone through the drying zone heating media outlet (25). Dried biomass is transported through the drying zone (23) at a speed regulated by the feeding speed in the biomass inlet (21) and enters the heating zone (26) where the temperature of the biomass is elevated to a temperature near the desired torrefaction temperature. The heat is supplied to the heating zone (26) by means of a heating media through a heating zone heating media inlet (27) which leaves the heating zone through a heating zone heating media outlet (28). The heated material enters a first torrefaction zone (29) in which the temperature can be controlled by introducing heating media and/or cooling media in the first torrefaction zone heating/cooling media inlet (30) wherein said heating/cooling media exits the first torrefaction zone through the torrefaction zone heating/cooling media outlets (31). The biomass thereafter enters a second torrefaction zone (32) heating/cooling media can be supplied to the second torrefaction zone via the torrefaction zone cooling media inlet (33) and said heating/cooling media exits the torrefaction zone via a torrefaction zone cooling media outlet (34). The material transport in the heating zone (26) and torrefaction zones (29, 32) is driven by a common transport screw which is attached to a drum enclosing the heating zone (26) and torrefaction zones (29, 32).

Figure 2b shows a torrefaction reactor having a biomass inlet (21) wherein the biomass is introduced in the torrefaction arrangement by means of a feeding screw (22). The biomass is dried in a drying zone (23) wherein heat is supplied to the drying zone (23) by means of a heating media (e.g. hot gases) through a drying zone heating media inlet (24) and wherein the heating media leaves the drying zone through the drying zone heating media outlet (25). Dried biomass is transported through the drying zone (23) at a speed regulated by the feeding speed in the biomass inlet (21) and enter the heating zone (26) where the temperature of the biomass is elevated to a temperature near the desired torrefaction temperature. The heat is supplied to the heating zone (26) by means of a heating media through a heating zone heating media inlet (27) which leaves the heating zone through a heating zone heating media outlet (28). The transport of the biomass in the heating zone (26) is mediated by a heating zone transport screw which is fixed to the inner wall of a drum enclosing the heating zone (26). The material transport in the heating zone is controlled by the rotational speed of said drum and the biomass exits the heating zone through a connecting zone and enters a first torrefaction zone (29) and thereafter a second torrrefaction zone (32). The temperature in the torrefaction zone can be controlled by introducing heating media and/or cooling media in the torrefaction zone heating/cooling media inlets (30, 33) wherein said heating/cooling media exits the torrefaction zone through the torrefaction zone heating/cooling media outlets (31, 34). The biomass transport in the first torrefaction zone (29) and second torrefaction zone (32) is driven by a common transport screw which is attached to a drum enclosing the first torrefaction zone (29) and second torrefaction zone (32). The material transport in the torrefaction zones (29, 32) is controlled by rotational speed of said drum can be rotated independently of the drum enclosing the heating zone. Hence the material transport in the torrefaction zone can be controlled independently of the material transport in the heating zone.

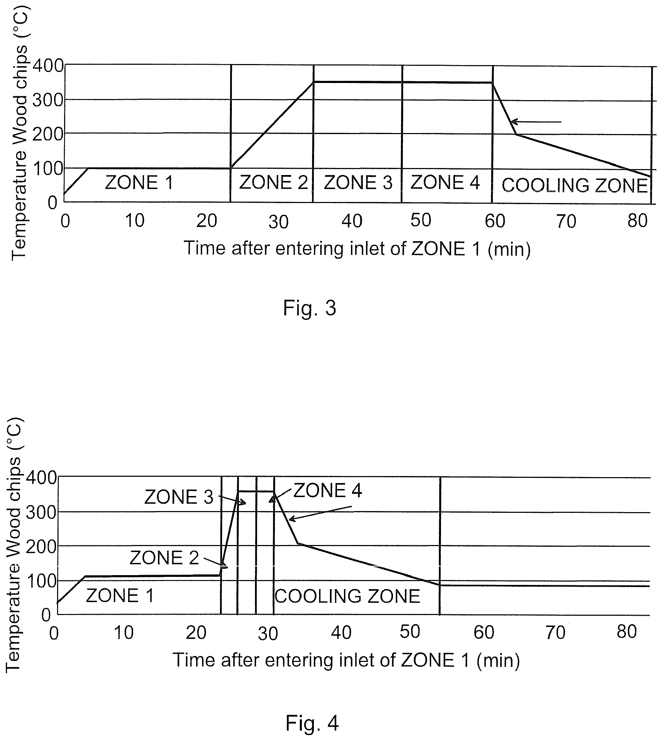

Figure 3 and 4 shows typical temperatures of the biomass in the different zones in the torrefaction arrangement disclosed in figures 2a and 2b, wherein the torrefaction arrangement is connected to the arrangement for cooling torrefied material described in figure 1b, in a manner described in figure 1a. Zone 1 represents the drying zone (2), zone 2 represents the heating zone (26), zone 3 represents the first torrefaction zone (29) and zone 4 represents the second torrefaction zone (32). In the drying zone (23) the biomass is dried, typically to a water content of 2-10 % (w/w) and the temperature is elevated to about 100 °C. In the heating zone (26), the temperature of the material is elevated to close to the desired torrefaction temperature, which in this example is 350 °C. In the torrefaction zones the temperature is kept virtually constant at the desired torrefaction temperature for a time corresponding to the desired torrefaction time. The cooling zone represents the arrangement for cooling torrefied material described in figure 1b. The arrow indicates the initial quench-cooling in the water application device (3) and thereafter the torrefied material is cooled to a temperature below 100 °C in the cooling device (4) for further cooling the torrefied material.

### References

[1] M. J Prins et al. More efficient biomass gasification via torrefaction. Energy 2006, 31, (15), 3458-3470.
[2] P. C. A. Bergman et al. Torrefaction for Entrained Flow Gasification of Biomass; Report C--05-067; Energy Research Centre of The Netherlands (ECN): Petten, The Netherlands, July 2005;
[3] K. Håkansson et al. Torrefaction and gasification of hydrolysis residue. 16th European biomass conference and exhibition, Valencia, Spain. ETAFlorence, 2008.
[4] A. Nordin, L. Pommer, I. Olofsson, K. Håkansson, M. Nordwaeger, S. Wiklund Lindström, M. Broström, T. Lestander, H. Orberg, G. Kalén, Swedish Torrefaction R&D program. First Annual Report 2009-12-18 (2009).

## Claims

1. A torrefaction method, comprising the steps of:
a) subjecting an optionally pretreated biomass to torrefaction to produce a torrefied material having a temperature of 220-600 °C and torrefaction gases in a torrefaction reactor having an outlet;
b) quench cooling the torrefied material by applying water to the torrefied material at or in connection to the outlet of the torrefaction reactor, to reduce the temperature of the torrefied material, provided that the temperature is not reduced below 120 °C, preferably not below 150 °C, most preferably not below 190 °C;
c) further cooling the torrefied material and at least part of the torrefaction gases generated during step a) and/or b) in a common cooling device such that components of the torrefaction gases condense in the common cooling device,
wherein, during step c), the torrefaction gases are diverted from the common cooling device before the cooling of the torrefied material is completed and when they have a temperature above the water dew point, such as above 80 °C, such as 100-200 °C, such as 150-200 °C.

2. Method according to claim 1, wherein the torrefied material produced in step a) has a temperature of 240-500 °C, such as 240-400 °C, such as 240-350 °C such as 270-350 °C, before step b).

3. Method according to any one of the preceding claims, wherein the temperature of the torrefied material is reduced to below 250 °C, preferably below 220 °C, in step b).

4. Method according to any one of the preceding claims, wherein the temperature of the torrefied material is reduced to 150-220 °C in step b).

5. Method according to any one of the preceding claims, wherein the temperature of the torrefied material is reduced to below 130 °C, preferably below 100 °C in step c).

6. A method according to any one of the preceding claims, wherein the biomass is lignocellulosic biomass, such as wood chips.

7. A system for cooling a torrefied material, comprising:
a torrefaction reactor for converting an optionally pretreated biomass to a torrefied material having a temperature of above 220 °C and torrefaction gases, said torrefaction reactor comprising an outlet;
a water application device for quench cooling the torrefied material by applying water to the torrefied material from the torrefaction reactor, said water application device being arranged at or in connection to the outlet of the torrefaction reactor;
a cooling device for further cooling the torrefied material and at least part of the torrefaction gases generated in the torrefaction reactor and/or the water application device, said cooling device being provided with means for guiding the torrefied material and the at least part of the torrefaction gases to an inlet of the cooling device,
wherein the cooling device comprises a first outlet for gases and a second outlet for torrefied material, wherein the first outlet is located upstream of the second outlet and said means for guiding at least part of the torrefaction gases is a fan arranged in connection to the first outlet.

## Patentansprüche

1. Röstverfahren, das die folgenden Schritte umfasst:
a) eine optional vorbehandelte Biomasse dem Rösten unterziehen, um ein geröstetes Material, das eine Temperatur von 220-600 °C hat, und Röstgase in einem Röstreaktor zu erzeugen, der einen Auslass hat;
b) Abschreckkühlung des gerösteten Materials durch Aufbringen von Wasser auf das geröstete Material am oder in Verbindung mit dem Auslass des Röstreaktors, um die Temperatur des gerösteten Materials zu reduzieren, vorausgesetzt, dass die Temperatur nicht unter 120 °C, vorzugsweise nicht unter 150 °C, am besten nicht unter 190 °C reduziert wird;
c) weiteres Kühlen des gerösteten Materials und zumindest eines Teils der Röstgase, die durch Schritt a) und/oder b) erzeugt wurden, in einer gemeinsamen Kühlvorrichtung derart, dass Komponenten der Röstgase in der gemeinsamen Kühlvorrichtung kondensieren,
wobei während Schritt c) die Röstgase aus der gemeinsamen Kühlvorrichtung umgeleitet werden, bevor das Kühlen des gerösteten Materials abgeschlossen ist, und wenn sie eine Temperatur oberhalb des Wassertaupunktes haben, wie zum Beispiel oberhalb 80 °C, wie zum Beispiel 100-200 °C, wie zum Beispiel 150-200 °C.

2. Verfahren nach Anspruch 1, wobei das geröstete Material, das in Schritt a) erzeugt wurde, eine Temperatur von 240-500 °C, wie zum Beispiel 240-400 °C, wie zum Beispiel 240-350 °C, wie zum Beispiel 270-350 °C vor Schritt b) hat.

3. Verfahren nach einem der vorherigen Ansprüche, wobei die Temperatur des gerösteten Materials auf unter 250 °C, vorzugsweise unter 220 °C in Schritt b) reduziert wird.

4. Verfahren nach einem der vorherigen Ansprüche, wobei die Temperatur des gerösteten Materials auf 150-220 °C in Schritt b) reduziert wird.

5. Verfahren nach einem der vorherigen Ansprüche, wobei die Temperatur des gerösteten Materials auf unter 130 °C, vorzugsweise unter 100 °C in Schritt c) reduziert wird.

6. Verfahren nach einem der vorherigen Ansprüche, wobei die Biomasse lignozellulosehaltige Biomasse ist, wie zum Beispiel Holzspäne.

7. System zum Kühlen eines gerösteten Materials, umfassend:
einen Röstreaktor zum Umwandeln einer optional vorbehandelten Biomasse in ein geröstetes Material, das eine Temperatur von mehr als 220 °C hat, und in Röstgase, wobei der Röstreaktor einen Auslass hat;
eine Wasser-Anwendungsvorrichtung zur Abschreckkühlung des gerösteten Materials durch Aufbringen von Wasser auf das geröstete Material aus dem Röstreaktor, wobei die Wasser-Anwendungsvorrichtung am oder in Verbindung mit dem Auslass des Röstreaktors angeordnet ist;
eine Kühlvorrichtung zum weiteren Kühlen des gerösteten Materials und von mindestens einem Teil der Röstgase, die im Röstreaktor erzeugt wurden, und/oder die Wasser-Anwendungsvorrichtung, wobei die Kühlvorrichtung mit Mitteln zum Führen des gerösteten Materials und mindestens einem Teil der Röstgase zu einem Einlass der Kühlvorrichtung versehen ist,
wobei die Kühlvorrichtung einen ersten Auslass für Gase und einen zweiten Auslass für geröstetes Material umfasst, wobei der erste Auslass sich stromaufwärts vom zweiten Auslass befindet und das Mittel zum Führen von mindestens einem Teil der Röstgase ein Lüfter ist, der in Verbindung mit dem ersten Auslass angeordnet ist.

## Revendications

1. Procédé de torréfaction, comprenant les étapes consistant à :
a) soumettre une biomasse éventuellement prétraitée à une torréfaction pour produire un matériau torréfié possédant une température comprise entre 220 et 600 °C et des gaz de torréfaction dans un réacteur de torréfaction possédant une sortie ;
b) refroidir par trempage le matériau torréfié en appliquant de l'eau sur le matériau torréfié au niveau de ou en connexion avec la sortie du réacteur de torréfaction, afin de réduire la température du matériau torréfié, pourvu que la température ne descende pas en dessous de 120 °C, de préférence pas en dessous de 150 °C, plus préférablement pas en dessous de 190 °C ;
c) refroidir encore le matériau torréfié et au moins une partie des gaz de torréfaction générés lors de l'étape a) et/ou b) dans un dispositif de refroidissement commun de sorte que des composants des gaz de torréfaction se condensent dans le dispositif de refroidissement commun,
dans lequel, pendant l'étape c), les gaz de torréfaction sont détournés du dispositif de refroidissement commun avant que le refroidissement du matériau torréfié ne soit fini et lorsqu'il possède une température supérieure au point de rosée de l'eau, telle que supérieure à 80 °C, telle que comprise entre 100 et 200 °C, telle que comprise entre 150 et 200 °C.

2. Procédé selon la revendication 1, dans lequel le matériau torréfié produit dans l'étape a) possède une température comprise entre 240 et 500 °C, telle que comprise entre 240 et 400 °C, telle que comprise entre 240 et 350 °C, telle que comprise entre 270 et 350 °C, avant l'étape b).

3. Procédé selon l'une quelconque des revendications précédentes, dans lequel la température du matériau torréfié est réduite à une température inférieure à 250 °C, de préférence inférieure à 220 °C, dans l'étape b).

4. Procédé selon l'une quelconque des revendications précédentes, dans lequel la température du matériau torréfié est réduite à une température comprise entre 150 et 220 °C dans l'étape b).

5. Procédé selon l'une quelconque des revendications précédentes, dans lequel la température du matériau torréfié est réduite à une température inférieure à 130 °C, de préférence inférieure à 100 °C dans l'étape c) .

6. Procédé selon l'une quelconque des revendications précédentes, dans lequel la biomasse consiste en de la biomasse lignocellulosique, telle que des copeaux de bois.

7. Système permettant de refroidir un matériau torréfié, comprenant :
un réacteur de torréfaction permettant de convertir une biomasse éventuellement prétraitée en un matériau torréfié possédant une température supérieure à 220 °C et en des gaz de torréfaction, le réacteur de torréfaction comprenant une sortie ;
un dispositif d'application d'eau permettant de refroidir par trempage le matériau torréfié en appliquant de l'eau sur le matériau torréfié à partir du réacteur de torréfaction, ledit dispositif d'application d'eau étant agencé au niveau de ou en connexion avec la sortie du réacteur de torréfaction ;
un dispositif de refroidissement permettant de refroidir davantage le matériau torréfié et au moins une partie des gaz de torréfaction générés dans le réacteur de torréfaction et/ou le dispositif d'application d'eau, ledit dispositif de refroidissement étant équippé d'un moyen permettant de guider le matériau torréfié et l'au moins une partie des gaz de torréfaction vers une entrée du dispositif de refroidissement,
dans lequel le dispositif de refroidissement comprend une première sortie pour des gaz et une deuxième sortie pour le matériau torréfié, dans lequel la première sortie est située en amont de la deuxième sortie et ledit moyen permettant de guider au moins une partie des gaz de torréfaction consiste en un ventilateur agencé en connexion avec la première sortie.
